# EUROPEAN PATENT APPLICATION

(11) **EP 4 443 531 A1**
(43) Date of publication of application: **09.10.2024**
(21) Application number: 24168796.1
(22) Date of filing: 05.04.2024
(51) Int. Cl.: H01M 4/04, H01M 4/131, H01M 4/505, H01M 4/525, H01M 4/62, H01M 10/0562, H01M 4/02, H01M 10/052, H01M 10/0525

(54) **POSITIVE ELECTRODE PLATE, ELECTROCHEMICAL APPARATUS, AND ELECTRONIC APPARATUS**

(30) Priority: 07.04.2023 CN 202310361920
(71) Applicant: Ningde Amperex Technology Ltd., Ningde City, Fujian 352100 (CN)
(72) Inventor: LIN, Xiaoping, Ningde City, Fujian Province, People s Republic of China, 352100 (CN)
(74) Representative: Icosa

(57) **Abstract**

A positive electrode plate includes a positive electrode current collector and a positive electrode material layer provided on at least one surface of the positive electrode current collector. The positive electrode material layer includes one-dimensional ion-conducting fiber and a positive electrode active material. The one-dimensional ion-conducting fiber has a diameter of 0.1 µm to 10 µm and a length-diameter ratio of greater than or equal to 1.5. A mass ratio of the one-dimensional ion-conducting fiber to the positive electrode active material is 0.01:1 to 0.2:1. The diameter and length-diameter ratio of the one-dimensional ion-conducting fiber as well as the mass ratio of the one-dimensional ion-conducting fiber to the positive electrode active material being controlled within the above ranges can reduce interfacial impedance between the positive electrode plate and a solid electrolyte and internal impedance of the positive electrode plate, thereby improving electrochemical performance of the electrochemical apparatus, for example, improving cycling performance and reducing impedance.

## Description

### TECHNICAL FIELD

This application relates to the field of electrochemical technologies, and in particular, to a positive electrode plate, an electrochemical apparatus, and an electronic apparatus.

### BACKGROUND

Lithium-ion batteries have been widely used in the field of consumer electronics by virtue of their advantages such as high energy density, high operating voltage, low self-discharge rate, small size, and low weight. Currently, with rapid development of electric vehicles and mobile electronic devices, people are imposing increasingly high requirements for energy density, safety performance, and the like of lithium-ion batteries.

As the energy density of lithium-ion batteries continues to increase, the safety of the lithium-ion batteries has become an urgent issue to address. Conventional electrolyte is generally a solution containing a lithium salt and an organic solvent, and has a narrow electrochemical window and a narrow applicable temperature range. A large amount of irreversible capacity is generated during formation of a solid electrolyte interface film (SEI film). At the same time, the organic solvent has characteristics such as low boiling point and being prone to leakage, and may also corrode packaging bags or packaging materials, thus posing safety hazards. Replacing part of a liquid electrolyte in lithium-ion batteries with a solid electrolyte can effectively alleviate safety hazards brought by the liquid electrolyte. Solid electrolyte, compared with liquid electrolyte, has a wider electrochemical window and a broader applicable temperature range, and is non-flammable, thus compensating for the deficiencies of the liquid electrolyte in terms of safety. However, due to the lack of fluidity of the solid electrolyte itself, interfacial contact between the positive electrode plate and the solid electrolyte is poor, and transport of lithium ions is hindered. Therefore, lithium-ion batteries containing a solid electrolyte, that is, solid lithium-ion batteries, although having solved the safety problem, still have relatively high interfacial impedance, thus affecting electrochemical performance of the lithium-ion batteries.

### SUMMARY

This application is intended to provide a positive electrode plate, an electrochemical apparatus, and an electronic apparatus, so as to reduce interfacial impedance, thereby improving electrochemical performance of the electrochemical apparatus.

It should be noted that in the summary of this application, a lithium-ion battery is used as an example of an electrochemical apparatus to explain this application. However, the electrochemical apparatus in this application is not limited to the lithium-ion battery. Specific technical solutions are as follows:
A first aspect of this application provides a positive electrode plate including a positive electrode current collector and a positive electrode material layer provided on at least one surface of the positive electrode current collector. The positive electrode material layer includes one-dimensional ion-conducting fiber and a positive electrode active material. The one-dimensional ion-conducting fiber has a diameter of 0.1 µm to 10 µm and a length-diameter ratio of greater than or equal to 1.5; preferably, the one-dimensional ion-conducting fiber has a diameter of 0.1 µm to 2 µm and a length-diameter ratio of 1.5 to 20000; and more preferably, the one-dimensional ion-conducting fiber has a diameter of 0.1 µm to 2 µm and a length-diameter ratio of 5 to 200. A mass ratio of the one-dimensional ion-conducting fiber to the positive electrode active material is 0.01:1 to 0.2:1, and preferably, the mass ratio of the one-dimensional ion-conducting fiber to the positive electrode active material is 0.01:1 to 0.05:1. The diameter and length-diameter ratio of the one-dimensional ion-conducting fiber as well as the mass ratio of the one-dimensional ion-conducting fiber to the positive electrode active material being controlled within the above ranges can reduce interfacial impedance between the positive electrode plate and a solid electrolyte and internal impedance of the positive electrode plate. In this way, electrochemical performance of an electrochemical apparatus is improved, while energy density of the electrochemical apparatus is essentially unaffected.

In some embodiments of this application, length of the one-dimensional ion-conducting fiber is greater than or equal to 1 µm; preferably, the length of the one-dimensional ion-conducting fiber is 1 µm to 1000 µm; and more preferably, the length of the one-dimensional ion-conducting fiber is 1 µm to 100 µm. The length of the one-dimensional ion-conducting fiber being within the above ranges allows for more contact points between the positive electrode plate and the solid electrolyte, thus increasing interfacial contact between the positive electrode plate and the solid electrolyte, and in turn improving the continuity of lithium ion transport during charge and discharge of the electrochemical apparatus and reducing the interfacial impedance of the positive electrode plate. This is also conducive to creating continuous lithium ion transport channels within the positive electrode plate, allowing for smooth transport of lithium ions, improving the continuity of lithium ion transport within the positive electrode plate, and reducing the internal impedance of the positive electrode plate. In this way, the electrochemical performance of the electrochemical apparatus is improved.

In some embodiments of this application, based on mass of the positive electrode material layer, a mass percentage of the one-dimensional ion-conducting fiber is 1% to 15%. The mass percentage of the one-dimensional ion-conducting fiber being controlled within the above range can increase the interfacial contact between the positive electrode plate and the solid electrolyte, thereby improving the continuity of lithium ion transport during charge and discharge of the electrochemical apparatus and reducing the interfacial impedance of the positive electrode plate. This is also conducive to creating continuous lithium ion transport channels within the positive electrode plate, improving the continuity of lithium ion transport within the positive electrode plate, and reducing the internal impedance of the positive electrode plate. In this way, the electrochemical performance of the electrochemical apparatus is improved.

In some embodiments of this application, ionic conductivity of the one-dimensional ion-conducting fiber is greater than or equal to 1×10⁻⁶ S/cm. The ionic conductivity of the one-dimensional ion-conducting fiber falling within the above range indicates that the one-dimensional ion-conducting fiber has good ion-conducting performance, thus allowing for smooth transport of lithium ions at the interface between the positive electrode plate and the solid electrolyte, and reducing the interfacial impedance of the positive electrode plate. This can also guarantee the continuity of lithium ion transport within the positive electrode plate and reduce the internal impedance of the positive electrode plate. In this way, the electrochemical performance of the electrochemical apparatus is improved.

In some embodiments of this application, the positive electrode plate satisfies at least one of the following characteristics: (1) the one-dimensional ion-conducting fiber includes copper-ion-modified cellulose; or (2) the one-dimensional ion-conducting fiber includes polymer fiber containing an ion-conducting substance and a polymer, where the ion-conducting substance includes at least one of the following compounds or doped compounds thereof: LATP, LLZO, LLTO, LLZTO, or LAGP, and a doping element in the doped compound includes at least one of Al, Ge, or Si; the polymer includes at least one of polyacrylonitrile, polyaniline, polyvinyl fluoride, polymethyl methacrylate, or polyacrylic acid; and a mass ratio of the ion-conducting substance to the polymer is 1:2 to 1:1. The selection of the one-dimensional ion-conducting fiber of the above types can increase the interfacial contact between the positive electrode plate and the solid electrolyte, thereby improving the continuity of lithium ion transport during charge and discharge of the electrochemical apparatus and reducing the interfacial impedance of the positive electrode plate. This is also conducive to creating continuous lithium ion transport channels within the positive electrode plate, improving the continuity of lithium ion transport within the positive electrode plate, and reducing the internal impedance of the positive electrode plate.

In some embodiments of this application, the positive electrode active material includes at least one of lithium cobaltate, lithium manganate, lithium iron phosphate, lithium nickel cobalt manganese oxide, or a material rich in lithium or manganese. The selection of the positive electrode active material of the above types is conducive to obtaining an electrochemical apparatus with good cycling performance.

In some embodiments of this application, thickness of the positive electrode material layer is 3 µm to 195 µm, and thickness of the positive electrode plate is 15 µm to 200 µm. The thickness of the positive electrode material layer and thickness of the positive electrode plate being controlled within the above ranges is conducive to obtaining an electrochemical apparatus with good cycling performance.

A second aspect of this application provides an electrochemical apparatus including a solid electrolyte and the positive electrode plate according to any one of the foregoing embodiments. Therefore, the electrochemical apparatus provided in this application has good electrochemical performance.

A third aspect of this application provides an electronic apparatus including the electrochemical apparatus according to any one of the foregoing embodiments. Therefore, the electronic apparatus provided in this application has good use performance.

This application has the following beneficial effects:
This application provides a positive electrode plate, an electrochemical apparatus, and an electronic apparatus. The positive electrode plate includes a positive electrode current collector and a positive electrode material layer provided on at least one surface of the positive electrode current collector. The positive electrode material layer includes one-dimensional ion-conducting fiber and a positive electrode active material. The one-dimensional ion-conducting fiber has a diameter of 0.1 µm to 10 µm and a length-diameter ratio of greater than or equal to 1.5. A mass ratio of the one-dimensional ion-conducting fiber to the positive electrode active material is 0.01:1 to 0.2:1. The diameter and length-diameter ratio of the one-dimensional ion-conducting fiber as well as the mass ratio of the one-dimensional ion-conducting fiber to the positive electrode active material being controlled within the above ranges can reduce interfacial impedance between the positive electrode plate and a solid electrolyte and internal impedance of the positive electrode plate, thereby improving electrochemical performance of the electrochemical apparatus, for example, improving cycling performance and reducing impedance.

Certainly, when any one of the products or methods of this application is implemented, all advantages described above are not necessarily achieved simultaneously.

### BRIEF DESCRIPTION OF DRAWINGS

To describe technical solutions in some embodiments of this application or in the prior art more clearly, the following briefly describes the accompanying drawings required for describing some embodiments or the prior art. Apparently, the accompanying drawings in the following descriptions show some embodiments of this application, and persons of ordinary skill in the art may still derive others drawings from these accompanying drawings.
FIG. 1 is a schematic structural diagram of a positive electrode plate in the related art;
FIG. 2 is a schematic structural diagram of internal structural changes of the positive electrode plate in FIG. 1 during charge and discharge; and
FIG. 3 is a diagram showing a cycling performance test for example 16 and comparative example 3.

### DESCRIPTION OF EMBODIMENTS

The following clearly and completely describes the technical solutions in some embodiments of this application with reference to the accompanying drawings in some embodiments of this application. Apparently, the described embodiments are some but not all embodiments of this application. All other embodiments obtained by persons of ordinary skill in the art based on some embodiments of this application without creative efforts shall fall within the protection scope of this application.

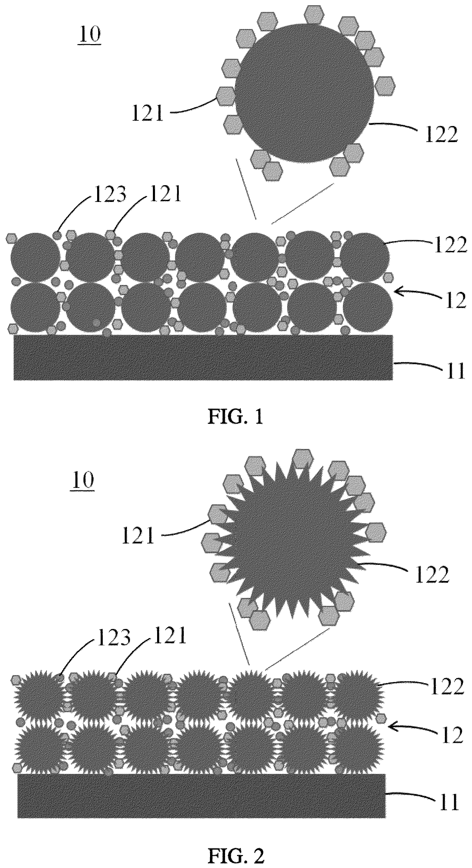

It should be noted that in specific embodiments of this application, an example in which a lithium-ion battery is used as an electrochemical apparatus is used to illustrate this application. However, the electrochemical apparatus in this application is not limited to the lithium-ion battery. Specific technical solutions are as follows:
In solid lithium-ion batteries, the introduction of an ion-conducting substance such as solid electrolyte into a positive electrode plate can alleviate the problem of high interfacial impedance and internal impedance in the positive electrode plate caused by poor ion transport of a positive electrode active material itself. Currently, solid electrolyte is mostly granular. As shown in FIG. 1, a positive electrode plate 10 includes a positive electrode current collector 11 and a positive electrode material layer 12 provided on a surface of the positive electrode current collector 11. The positive electrode material layer 12 contains a solid electrolyte 121, a positive electrode active material 122, and a binder 123. Since both the solid electrolyte 121 and the positive electrode active material 122 are granular, there are a small amount of contact points between them. In this case, the introduction of the solid electrolyte 121 still makes it difficult to create continuous lithium ion channels on a surface and inside the positive electrode plate 10, and the lithium-ionic impedance remains high, resulting in still relatively large interfacial impedance and internal impedance of the positive electrode plate. If the amount of the solid electrolyte 121 is increased to improve transport of lithium ions, energy density of the solid lithium-ion battery will be affected. In addition, during charge and discharge of the solid lithium-ion battery, volume of the positive electrode active material particles increases, causing some of the lithium ion transport channels to be blocked (as shown in FIG. 2), thereby further increasing the interfacial impedance and the internal impedance of the positive electrode plate, affecting the electrochemical performance of the solid lithium-ion battery. In view of the foregoing problems, this application provides a positive electrode plate, an electrochemical apparatus, and an electronic apparatus, so as to reduce internal impedance of the positive electrode plate and interfacial impedance, thereby improving electrochemical performance of the electrochemical apparatus. In this application, the solid lithium-ion battery may refer to an all-solid lithium-ion battery, a semi-solid lithium-ion battery, or a quasi-solid lithium-ion battery. The full solid lithium-ion battery refers to a lithium-ion battery not containing a liquid electrolyte. A semi-solid lithium-ion battery refers to a lithium-ion battery in which a mass ratio of a liquid electrolyte to the lithium-ion battery is 0.05 to 0.1. A quasi-solid lithium-ion battery refers to a lithium-ion battery in which a mass ratio of a liquid electrolyte to the lithium-ion battery is greater than 0 and less than 0.05.

A first aspect of this application provides a positive electrode plate including a positive electrode current collector and a positive electrode material layer provided on at least one surface of the positive electrode current collector. The positive electrode material layer includes one-dimensional ion-conducting fiber and a positive electrode active material. The one-dimensional ion-conducting fiber has a diameter of 0.1 µm to 10 µm and a length-diameter ratio of greater than or equal to 1.5. Preferably, the one-dimensional ion-conducting fiber has a diameter of 0.1 µm to 2 µm and a length-diameter ratio of 1.5 to 20000. More preferably, the one-dimensional ion-conducting fiber has a diameter of 0.1 µm to 2 µm and a length-diameter ratio of 5 to 200. A mass ratio of the one-dimensional ion-conducting fiber to the positive electrode active material is 0.01:1 to 0.2:1, preferably 0.01:1 to 0.05:1. For example, the diameter D of the one-dimensional ion-conducting fiber may be 0.1 µm, 0.3 µm, 0.5 µm, 0.7 µm, 1 µm, 2 µm, 5 µm, 7 µm, or 10 µm, or in a range defined by any two of these values. For example, the length-diameter ratio X of the one-dimensional ion-conducting fiber may be 1.5, 5, 10, 50, 100, 150, 200, 500, 1000, 2000, 3000, 5000, 10000, 15000, or 20000, or in a range defined by any two of these values. For example, the mass ratio Y of the one-dimensional ion-conducting fiber to the positive electrode active material may be 0.01:1, 0.02:1, 0.05:1, 0.08:1, 0.1:1, 0.12:1, 0.15:1, 0.18:1, or 0.2:1, or in a range defined by any two of these values. The above "positive electrode material layer provided on at least one surface of the positive electrode current collector" means that the positive electrode material layer may be provided on one surface of the positive electrode current collector in a thickness direction thereof or on two surfaces of the positive electrode current collector in the thickness direction thereof. It should be noted that the "surface" herein may be an entire region or a partial region of the surface of the positive electrode current collector. This is not particularly limited in this application, provided that the objectives of this application can be achieved.

The positive electrode plate includes the positive electrode current collector and the positive electrode material layer provided on the surface of the positive electrode current collector. The positive electrode material layer includes the one-dimensional ion-conducting fiber and the positive electrode active material. On one hand, the one-dimensional ion-conducting fiber with a linear structure allows for good interfacial contact between the positive electrode plate and the solid electrolyte, which can improve the continuity of lithium ion transport during charge and discharge of the electrochemical apparatus, and reduce the interfacial impedance of the positive electrode plate. On the other hand, the one-dimensional ion-conducting fiber added can have good interfacial contact with positive electrode active material particles in the positive electrode plate, thus allowing for smooth transport of lithium ions. Additionally, with the linear structure, the one-dimensional ion-conducting fiber is less affected by a volume change of the positive electrode active material, allowing good interfacial contact to be maintained between the one-dimensional ion-conducting fiber and the positive electrode active material during charge and discharge of the electrochemical apparatus, ensuring smooth transport of lithium ions, improving the continuity of lithium ion transport within the positive electrode plate, and reducing the internal impedance of the positive electrode plate. In this way, the positive electrode plate provided in this application can be used in an electrochemical apparatus containing a solid electrolyte, which can reduce the interfacial impedance between the positive electrode plate and the solid electrolyte and the internal impedance of the positive electrode plate, thereby improving the electrochemical performance of the electrochemical apparatus, for example, improving cycling performance and reducing impedance.

Specifically, when the diameter of the one-dimensional ion-conducting fiber is excessively small, for example, less than 0.1 µm, the difficulty in preparing the one-dimensional ion-conducting fiber increases, leading to higher costs, and the one-dimensional ion-conducting fiber is easy to break, thereby affecting the continuity of lithium ion transport within the positive electrode plate. When the diameter of the one-dimensional ion-conducting fiber is excessively large, for example, less than 10 µm, the interfacial contact between the positive electrode plate and the solid electrolyte becomes poor, resulting in increased interfacial impedance. When the length-diameter ratio of the one-dimensional ion-conducting fiber is excessively small, for example, less than 1.5, its linear structure characteristic is inconspicuous, making it difficult to improve the continuity of lithium ion transport. When the mass ratio of the one-dimensional ion-conducting fiber to the positive electrode active material is excessively small, for example, less than 0.01:1, the amount of the one-dimensional ion-conducting fiber is too low to create continuous lithium ion transport channels, which cannot improve the continuity of lithium ion transport. When the mass ratio of the one-dimensional ion-conducting fiber to the positive electrode active material is excessively large, for example, less than 0.2:1, the amount of the positive electrode active material is reduced, thereby affecting the energy density of the electrochemical apparatus. The diameter and length-diameter ratio of the one-dimensional ion-conducting fiber as well as the mass ratio of the one-dimensional ion-conducting fiber to the positive electrode active material being controlled within the above ranges can reduce interfacial impedance between the positive electrode plate and a solid electrolyte and internal impedance of the positive electrode plate. In this way, electrochemical performance of an electrochemical apparatus is improved, while energy density of the electrochemical apparatus is essentially unaffected.

In some embodiments of this application, length L of the one-dimensional ion-conducting fiber is greater than or equal to 1 µm, preferably 1 µm to 1000 µm, and more preferably 1 µm to 100 µm. For example, the length of the one-dimensional ion-conducting fiber may be 1 µm, 5 µm, 10 µm, 50 µm, 100 µm, 300 µm, 500 µm, 800 µm, or 1000 µm, or in a range defined by any two of these values. The length of the one-dimensional ion-conducting fiber being within the above ranges allows for more contact points between the positive electrode plate and the solid electrolyte, thus increasing interfacial contact between the positive electrode plate and the solid electrolyte, and in turn improving the continuity of lithium ion transport during charge and discharge of the electrochemical apparatus and reducing the interfacial impedance of the positive electrode plate. This is also conducive to creating continuous lithium ion transport channels within the positive electrode plate, allowing for smooth transport of lithium ions, improving the continuity of lithium ion transport within the positive electrode plate, and reducing the internal impedance of the positive electrode plate. In this way, the electrochemical performance of the electrochemical apparatus is improved.

In some embodiments of this application, based on mass of the positive electrode material layer, a mass percentage W of the one-dimensional ion-conducting fiber is 1% to 15%. For example, the mass percentage of the one-dimensional ion-conducting fiber may be 1%, 3%, 5%, 7%, 9%, 10%, 12%, or 15%, or in a range defined by any two of these values. The mass percentage of the one-dimensional ion-conducting fiber being controlled within the above range can increase the interfacial contact between the positive electrode plate and the solid electrolyte, thereby improving the continuity of lithium ion transport during charge and discharge of the electrochemical apparatus and reducing the interfacial impedance of the positive electrode plate. This is also conducive to creating continuous lithium ion transport channels within the positive electrode plate, improving the continuity of lithium ion transport within the positive electrode plate, and reducing the internal impedance of the positive electrode plate. In this way, the electrochemical performance of the electrochemical apparatus is improved.

In this application, the percentage of the positive electrode active material in the positive electrode material layer can be calculated based on the mass ratio Y of the one-dimensional ion-conducting fiber to the positive electrode active material and the mass percentage W of the one-dimensional ion-conducting fiber, and selected based on an actual situation. For example, based on the mass of the positive electrode material layer, the mass percentage of the positive electrode active material may be 60% to 99%, preferably 80% to 99%.

In some embodiments of this application, ionic conductivity of the one-dimensional ion-conducting fiber is greater than or equal to 1×10⁻⁶ S/cm, preferably 1×10⁻⁶ S/cm to 1×10² S/cm. For example, the ionic conductivity of the one-dimensional ion-conducting fiber may be 1×10⁻⁶ S/cm, 1×10⁻⁵ S/cm, 1×10⁻⁴ S/cm, 1×10⁻³ S/cm, 1×10⁻² S/cm, 1×10 S/cm, or 1×10² S/cm, or in a range defined by any two of these values. The ionic conductivity of the one-dimensional ion-conducting fiber falling within the above range indicates that the one-dimensional ion-conducting fiber has good ion-conducting performance, thus allowing for smooth transport of lithium ions at the interface between the positive electrode plate and the solid electrolyte, and reducing the interfacial impedance of the positive electrode plate. This can also guarantee the continuity of lithium ion transport within the positive electrode plate and reduce the internal impedance of the positive electrode plate. In this way, the electrochemical performance of the electrochemical apparatus is improved.

In some embodiments of this application, the one-dimensional ion-conducting fiber may be conductive one-dimensional ion-conducting fiber or non-conductive one-dimensional ion-conducting fiber. When the one-dimensional ion-conducting fiber is conductive one-dimensional ion-conducting fiber, electronic conductivity of the one-dimensional ion-conducting fiber may be 10⁻⁸ S/cm to 10⁸ S/cm. Therefore, on the basis of improving the interfacial contact between the positive electrode plate and the solid electrolyte and reducing the interfacial impedance of the positive electrode plate, and improving the continuity of lithium ion transport within the positive electrode plate and reducing the internal impedance of the positive electrode plate, it is also possible to improve the electronic conductivity of the positive electrode plate, thereby improving the electrochemical performance of the electrochemical apparatus.

In some embodiments of this application, the one-dimensional ion-conducting fiber includes copper-ion-modified cellulose. In some embodiments of this application, the one-dimensional ion-conducting fiber includes polymer fiber containing an ion-conducting substance and a polymer, where the ion-conducting substance includes at least one of the following compounds or doped compounds thereof: LATP, LLZO, LLTO, LLZTO, or LAGP, and a doping element in the doped compound includes at least one of Al, Ge, or Si; the polymer includes at least one of polyacrylonitrile, polyaniline, polyvinyl fluoride, polymethyl methacrylate, or polyacrylic acid; and a mass ratio of the ion-conducting substance to the polymer is 1:2 to 1:1. In some embodiments of this application, the one-dimensional ion-conducting fiber includes copper-ion-modified cellulose and the above polymer fiber. The selection of the one-dimensional ion-conducting fiber of the above types can increase the interfacial contact between the positive electrode plate and the solid electrolyte, thereby improving the continuity of lithium ion transport during charge and discharge of the electrochemical apparatus and reducing the interfacial impedance of the positive electrode plate. This is also conducive to creating continuous lithium ion transport channels within the positive electrode plate, improving the continuity of lithium ion transport within the positive electrode plate, and reducing the internal impedance of the positive electrode plate. In this way, the electrochemical performance of the electrochemical apparatus is improved. The above copper-ion-modified cellulose is obtained by soaking cellulose in a salt solution containing copper ions, and a mass percentage of copper ions in the copper-ion-modified cellulose may be 0.1% to 10%. The salt solution containing copper ions may include but is not limited to a solution containing at least one of the following copper salts: copper nitrate or copper sulfate. The salt solution containing copper ions may be an aqueous solution or ethanol solution of copper salt. A soaking time and temperature are not particularly limited in this application, provided that the objectives of this application can be achieved. A mass percentage of the doping element in the doped compound is not particularly limited in this application, provided that the objectives of this application can be achieved. For example, based on the doped compound, the mass percentage of the doping elements is 0.01% to 3%. In this application, LATP is lithium aluminum titanium phosphate, with a general formula of Li₁₊ᵤAlᵤTi₂₋ᵤ(PO₄)₃, where 0 < u ≤ 0.5, and specifically may be Li_{1.3}Al_{0.3}Ti_{1.7}(PO₄)₃, Li_{1.5}Al_{0.5}Ti_{1.5}(PO₄)₃, or the like; LLZO is Li₇La₃Zr₂O₁₂; LLTO is lithium lanthanum titanate, with a general formula of Li₃ᵥLa_{2/3-v}TiO₃, where 0 < v ≤ 0.2, and specifically may be Li_{0.34}La_{0.55}TiO₃, Li_{0.5}La_{0.5}TiO₃, Li_{0.33}La_{0.56}TiO₃, Li_{0.35}La_{0.55}TiO₃, or the like; LLZTO is Li_{6.4}La₃Zr_{1.4}Ta_{0.6}O₁₂; and LAGP is Li_{1.5}Al_{0.5}Ge_{1.5}P₃O_{12.}

In some embodiments of this application, the positive electrode active material includes at least one of lithium cobaltate, lithium manganate, lithium iron phosphate, lithium nickel cobalt manganese oxide, or a material rich in lithium or manganese. Lithium nickel cobalt manganese oxide may include but is not limited to at least one of LiNi_{0.8}Co_{0.1}Mn_{0.1}O₂ (NCM811), LiNi_{0.6}Co_{0.2}Mn_{0.2}O₂ (NCM622), or LiNi_{0.5}Co_{0.3}Mn_{0.2}O₂ (NCM532). The material rich in lithium or manganese may include but is not limited to at least one of LiMnO, LiCoO, Li₂MnO, LiNiCoO, x₁LiMnO·(1-x₁)LiNiMnO, or x₂LiMnO·(1-x₂)LiNiCoMnO, where 0 ≤ x₁ ≤ 1, 0 ≤ x₂ ≤ 1. The selection of the positive electrode active material of the above types is conducive to obtaining an electrochemical apparatus with good cycling performance.

In some embodiments of this application, thickness Hi of the positive electrode material layer is 3 µm to 195 µm, and thickness H₂ of the positive electrode plate is 15 µm to 200 µm; and preferably, the thickness of the positive electrode material layer is 30 µm to 80 µm, and the thickness of the positive electrode plate is 35 µm to 200 µm. For example, the thickness of the positive electrode material layer may be 3 µm, 5 µm, 10 µm, 20 µm, 30 µm, 50 µm, 80 µm, 100 µm, 130 µm, 150 µm, 180 µm, or 195µm. For example, the thickness of the positive electrode plate may be 15 µm, 20 µm, 30 µm, 35 µm, 50 µm, 80 µm, 100 µm, 130 µm, 150 µm, 180 µm, or 200 µm. The thicknesses of the positive electrode material layer and the positive electrode plate being controlled within the above ranges is conducive to obtaining the electrochemical apparatus with good cycling performance.

A preparation method of the one-dimensional ion-conducting fiber is not particularly limited in this application, provided that the objectives of this application can be achieved. For example, the preparation method of the one-dimensional ion-conducting fiber may include but is not limited to the following preparation steps: an ion-conducting substance with a mass of mi and a polymer with a mass of m₂ are dissolved in an organic solvent with a volume of V, the resulting mixer is stirred to uniformity to obtain a spinning solution, and then fiber is obtained using the spinning solution through electrostatic spinning and dried for later use; and then the obtained fiber is pre-oxidized in an air furnace followed by heat treatment under nitrogen or air atmosphere to obtain one-dimensional ion-conducting fiber. The ion-conducting substance includes at least one of the following compounds or doped compounds thereof: LATP, LLZO, LLTO, LLZTO, or LAGP, and a doping element in the doped compound includes at least one of Al, Ge, or Si. The polymer may include but is not limited to at least one of polyacrylonitrile, polyaniline, polyvinyl fluoride, polymethyl methacrylate, or polyacrylic acid. The organic solvent may include but is not limited to at least one of N,N-dimethylformamide, acetone, or ethanol. The unit of m₁ and m₂ is g, and the unit of V is mL. The ratio of mi to m₂ is 1:2 to 1:1. A mass concentration of the spinning solution is not particularly limited in this application, provided that the objectives of this application can be achieved. For example, the mass concentration of the spinning solution may be 6% to 20%, preferably 8% to 19%. A particle size of the ion-conducting substance is not particularly limited in this application. Generally, the particle size of the ion-conducting substance is less than the diameter of the fiber. For example, a median particle size by volume of the ion-conducting substance is 100 nm to 1000 nm. It can be understood that when the median particle size by volume of the ion-conducting substance is less than the diameter of the one-dimensional ion-conducting fiber, the ion-conducting substance is encapsulated in the fiber. Certainly, some of the ion-conducting substance may be partially embedded in the fiber and partially not embedded in the fiber. When the volume average particle size of the ion-conducting substance is greater than the diameter of the one-dimensional ion-conducting fiber, the ion-conducting substance is partially embedded in the fiber and partially not embedded in the fiber. Generally, when the volume average particle size of the ion-conducting substance is greater than the diameter of the one-dimensional ion-conducting fiber, the median particle size by volume of the ion-conducting substance should be less than or equal to twice the diameter of the one-dimensional ion-conducting fiber. The temperature and time of the above pre-oxidation and heat treatment are not particularly limited in this application, provided that the objectives of this application can be achieved. For example, for the pre-oxidation, the temperature T₁ is 180°C to 250°C, the time ti is 0.5 h to 3 h, and the heating velocity S₁ is 0.5 °C/min to 3 °C/min; and for the heat treatment, the temperature T₂ is 500°C to 1200°C, the time t₂ is 0.5 h to 8 h, and the heating velocity S₂ is 0.5 °C/min to 6 °C/min.

Generally, the diameter of the one-dimensional ion-conducting fiber can be controlled by adjusting a mass concentration of the spinning solution and a spinning voltage during electrostatic spinning. For example, when the spinning voltage increases, the diameter of the one-dimensional ion-conducting fiber decreases; and when the spinning voltage decreases, the diameter of the one-dimensional ion-conducting fiber increases. For another example, when the mass concentration of the spinning solution increases, the diameter of the one-dimensional ion-conducting fiber increases; and when the mass concentration of the spinning solution decreases, the diameter of the one-dimensional ion-conducting fiber decreases. For the length-diameter ratio of the one-dimensional ion-conducting fiber, one-dimensional ion-conducting fibers with different length-diameter ratios can be obtained by grinding the one-dimensional ion-conducting fiber. Generally, longer grinding time leads to smaller length-diameter ratio of the one-dimensional ion-conducting fiber; and shorter grinding time leads to larger length-diameter ratio of the one-dimensional ion-conducting fiber. The method and time of grinding are not limited in this application and can be selected based on an actual situation, provided that the one-dimensional ion-conducting fiber with required length-diameter ratio can be obtained.

In this application, the positive electrode current collector is not particularly limited, provided that the objectives of this application can be achieved. For example, the positive electrode current collector may include but is not limited to aluminum foil, aluminum alloy foil, or a composite current collector (for example, an aluminum-carbon composite current collector). Thickness of the positive electrode current collector is not particularly limited in this application, provided that the objectives of this application can be achieved. For example, the thickness of the positive electrode current collector is 5 µm to 15 µm.

In this application, the positive electrode material layer may further include a conductive agent and a binder. Types of the conductive agent and the binder are not particularly limited in this application, provided that the objectives of this application can be achieved. For example, the conductive agent may include but is not limited to at least one of conductive carbon black (Super P), carbon nanotubes (CNTs), carbon fiber, flake graphite, Ketjen black, graphene, a metal material, or a conductive polymer. The carbon nanotubes may include but are not limited to single-walled carbon nanotubes and/or multi-walled carbon nanotubes. The carbon fiber may include but is not limited to vapor grown carbon fiber (VGCF) and/or carbon nanofiber. The metal material may include but is not limited to metal powder and/or metal fiber, and specifically, the metal may include but is not limited to at least one of copper, nickel, aluminum, or silver. The conductive polymer may include but is not limited to at least one of polyphenylene derivative, polyaniline, polythiophene, polyacetylene, or polypyrrole. For example, the binder may include but is not limited to at least one of polyacrylic acid, sodium polyacrylate, potassium polyacrylate, lithium polyacrylate, polyimide, polyvinyl alcohol, carboxymethyl cellulose, sodium carboxymethyl cellulose, lithium carboxymethyl cellulose, polyimide, polyamideimide, styrene butadiene rubber, or polyvinylidene fluoride.

Optionally, the positive electrode plate may further include a conductive layer, and the conductive layer is sandwiched between the positive electrode current collector and the positive electrode material layer. The conductive layer is not limited to a particular composition, and may be a common conductive layer in the art. The conductive layer includes a conductive agent and a binder. The conductive agent and binder in the conductive layer are not particularly limited in this application. For example, the conductive agent and the binder may respectively be at least one of the foregoing conductive agents and the foregoing binders.

A second aspect of this application provides an electrochemical apparatus including a solid electrolyte and the positive electrode plate according to any one of the foregoing embodiments. Therefore, the electrochemical apparatus provided in this application has good electrochemical performance. In this application, the electrochemical apparatus further includes a negative electrode plate and a separator, with the positive electrode plate, the separator, and the negative electrode plate stacked in sequence to obtain an electrode assembly. The separator is used for separating the positive electrode plate and the negative electrode plate to prevent a short circuit inside the electrochemical apparatus, and allow for free passage of electrolyte ions without affecting an electrochemical charge/discharge process.

In this application, the solid electrolyte includes at least one of Li₂₊ₓAl₂₊ₓSi₁₋ₓS₆, Li₃YCl₆, Li₃YBr₆, Li₃OCl, LiPON, Li_{0.5}La_{0.5}TiO₃, Li₁₊ₓAlₓTi₂₋ₓ(PO₄)₃, Li₇La₃Zr₂O₁₂, Li₁₀GeP₂S₁₂(LGPS), Li_{9.54}Si_{1.44}P_{1.44}S_{11.7}Cl_{0.3}, Li_{3.25}Ge_{0.25}P_{0.75}S₄, Li₁₁AlP₂S₁₂, or Li₇P₃S₁₁, where 0 ≤ x < 1.

In this application, the negative electrode plate includes only a negative electrode current collector, or the negative electrode plate includes a negative electrode current collector and a negative electrode material layer provided on at least one surface of the negative electrode current collector. The above "negative electrode material layer provided on at least one surface of the negative electrode current collector" means that the negative electrode material layer may be provided on one surface of the negative electrode current collector in a thickness direction thereof or on two surfaces of the negative electrode current collector in the thickness direction thereof. It should be noted that the "surface" herein may be an entire region or a partial region of the surface of the negative electrode current collector. This is not particularly limited in this application, provided that the objectives of this application can be achieved.

The negative electrode current collector is not particularly limited in this application, provided that the objectives of this application can be achieved. For example, the negative electrode current collector may include but is not limited to copper foil, copper alloy foil, nickel foil, stainless steel foil, titanium foil, foamed nickel, foamed copper, or a composite current collector (for example, a lithium-copper composite current collector, a carbon-copper composite current collector, a nickel-copper composite current collector, or a titanium-copper composite current collector).

The negative electrode material layer includes a negative electrode active material, and the negative electrode active material is not particularly limited in this application, provided that the objectives of this application can be achieved. For example, the negative electrode active material may include but is not limited to at least one of natural graphite, artificial graphite, mesocarbon microbeads, hard carbon, soft carbon, silicon, a silicon-carbon composite, Li-Sn alloy, Li-Sn-O alloy, Sn, SnO, SnO₂, spinel-structure lithiated TiO₂-Li₄Ti₅O₁₂, or Li-Al alloy.

The negative electrode material layer further includes a conductive agent and a binder. Types of the conductive agent and the binder are not particularly limited in this application, provided that the objectives of this application can be achieved. For example, the conductive agent and the binder may respectively be at least one of the foregoing conductive agents and the foregoing binders. A mass ration of the negative electrode active material, conductive agent, and binder in the negative electrode material layer is not particularly limited in this application, provided that the objectives of this application can be achieved.

Thickness of the negative electrode material layer is not particularly limited in this application, provided that the objectives of this application can be achieved. For example, the thickness of the negative electrode material layer is 30 µm to 120 µm. Thickness of the negative electrode current collector is not particularly limited in this application, provided that the objectives of this application can be achieved. For example, the thickness of the negative electrode current collector is 5 µm to 35 µm. Thickness of the negative electrode plate is not particularly limited in this application, provided that the objectives of this application can be achieved. For example, the thickness of the negative electrode plate is 50 µm to 250 µm.

Optionally, the negative electrode plate may further include a conductive layer, and the conductive layer is sandwiched between the negative electrode current collector and the negative electrode material layer. The conductive layer is not limited to a particular composition in this application, and may be a common conductive layer in the art. For example, the conductive layer includes a conductive agent and a binder. The conductive agent and binder in the conductive layer are not particularly limited in this application. For example, the conductive agent and the binder may respectively be at least one of the foregoing conductive agents and the foregoing binders.

The electrochemical apparatus in this application is not particularly limited, and may include any apparatus in which an electrochemical reaction takes place. In an embodiment of this application, the electrochemical apparatus may include but is not limited to a lithium-ion secondary battery (lithium-ion battery) or a lithium-ion polymer secondary battery. The electrochemical apparatus is not limited to any specific shape in this application, provided that the objectives of this application can be achieved, for example, may include but is not limited to a cylindrical battery, a prismatic battery, a specially shaped battery, or a button battery.

A preparation process of the electrochemical apparatus in this application is well known to those skilled in the art and is not particularly limited in this application. For example, the preparation process may include but is not limited to the following steps: a positive electrode plate, a separator, and a negative electrode plate are stacked in sequence, with a solid electrolyte added, and then go through operations such as winding and folding as needed to obtain an electrode assembly with a winding structure; and the electrode assembly is put into a packaging bag, and the packaging bag is sealed to obtain the electrochemical apparatus. Alternatively, a positive electrode plate, a separator, and a negative electrode plate are stacked in sequence, a solid electrolyte is added, four corners of the entire laminated structure are fixed with tapes to obtain an electrode assembly with a laminated structure, the electrode assembly is put into a packaging bag, and the packaging bag is sealed to obtain the electrochemical apparatus. In addition, an overcurrent prevention element, a guide plate, and the like may also be placed into the packaging bag as needed, so as to prevent pressure increase, overcharge, and overdischarge inside the electrochemical apparatus. The packaging bag is a packaging bag known in the art. This is not limited in this application.

A third aspect of this application provides an electronic apparatus including the electrochemical apparatus according to any one of the foregoing embodiments. Therefore, the electronic apparatus provided in this application has good use performance.

The electronic apparatus is not limited to any specific type in this application, and may be any known electronic apparatus in the prior art. In some embodiments, the electronic apparatus may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notepad, a calculator, a storage card, a portable recorder, a radio, a standby power source, a motor, an automobile, a motorcycle, a power-assisted bicycle, a bicycle, a lighting appliance, a toy, a game console, a clock, an electric tool, a flash lamp, a camera, a large household battery, or a lithium-ion capacitor.

### Examples

The following describes some embodiments of this application more specifically by using examples and comparative examples. Various tests and evaluations were performed in the following methods.

### Test method and equipment

### Measurement of diameter D, length L, and length-diameter ratio X of one-dimensional ion-conducting fiber

One-dimensional ion-conducting fiber material prepared was dispersed on a silicon wafer using anhydrous ethanol. Electron microscope images were taken using a scanning electron microscope (SEM (ZEISS)), and the diameter D and length L of the one-dimensional ion-conducting fiber in the electron microscope images were measured. Twenty fibers were tested, and an average value was taken as a final result. The length-diameter ratio of the one-dimensional ion-conducting fiber is X = L/D.

### Ionic conductivity test

The one-dimensional ion-conducting fiber were pressed by a tablet press at a pressure of about 10 MPa into small discs with a diameter of 14 mm, a cell was assembled with the small disc positioned between steel discs, and alternating current impedance of the cell was tested using an impedance analyzer. Ionic conductivity of one-dimensional ion-conducting fiber = thickness of small disc/(alternating current impedance × test area). The test was performed for three times on each example, and an average value was taken as a final result. The test area was circular, with a diameter of 5 mm. The steel disc was 316 stainless steel.

### Thickness test of positive electrode material layer and positive electrode plate

A micrometer was used to measure the thicknesses of the positive electrode plate and the positive electrode current collector in the examples and comparative examples. Thickness of positive electrode material layer = thickness of positive electrode plate - thickness of positive electrode current collector.

### Cycling performance test

At 25°C, the lithium-ion battery was constant-current charged at 0.5C to 3.7 V, then constant-voltage charged at 3.7 V until the current was less than 0.025C, left standing for 5 min, and then constant-current discharged at 0.5C to 2.8 V. This was one charge and discharge cycle, and a discharge capacity of each cycle was recorded. The foregoing steps for the lithium-ion battery were cycled many times under the foregoing conditions, and the discharge capacity of the lithium-ion battery was measured for each cycle. At the 50th, 100th, 150th, 200th, and 250th cycles, the following steps were performed for charge and discharge: the lithium-ion battery was constant-current charged at 0.05C to 3.7 V, then constant-voltage charged at 3.7 V until the current was less than 0.025C, left standing for 5 min, and then constant-current discharged at 0.05C to 2.8 V. The first-cycle discharge capacity was defined as 100%. The charge and discharge cycle was repeated until the discharge capacity retention rate decayed to 80% of the first-cycle discharge capacity. Then the number of cycles was recorded as an indicator for evaluating the cycling performance of the lithium-ion battery. Capacity retention rate = (capacity after discharge in each cycle/first-cycle discharge capacity) × 100%.

### Impedance test

At 25±2°C, the lithium-ion battery was constant-current charged at 0.1C to a voltage of 4.4 V, then constant-voltage charged at 4.45 V until the current was 0.05C, and left standing for 10 minutes. The battery was discharged at a current of 0.1C to a voltage of 3.4 V and left standing for 5 minutes. The battery was then constant-current charged at 0.1C to a voltage of 4.4 V, then constant-voltage charged at 4.45 V until the current was 0.05C, and left standing for 10 minutes. The battery was constant-current discharged at 0.1C for 7 seconds, with a voltage value U₁ recorded, and then discharged at a current of 1C for 1 second, with a voltage value U₂ recorded.

Impedance of the lithium-ion battery was calculated by using the following formula: impedance = (U₂-U₁)/(1C-0.1C). "1C" refers to a current at which a lithium-ion battery is fully discharged in one hour.

### Example 1

### <Preparation of one-dimensional ion-conducting fiber>

(1) An ion-conducting substance LATP with a mass mi = 2.2 g and a polymer polyacrylonitrile (PAN) with a mass m₂ = 2.2 g were dissolved in an organic solvent N,N-dimethylformamide with a volume V = 25mL, the resulting mixture was stirred to uniformity at 40°C to obtain a spinning solution with a mass concentration of 17.8%. Fiber was obtained using the spinning solution through electrostatic spinning and dried at 80°C for 12 h for later use. A median particle size by volume of the ion-conducting substance was 300 nm. The parameters in the electrostatic spinning process were as follows: a negative pressure was -4 kV, a positive pressure was 18 kV, a liquid input velocity was 0.3 mL/h, a distance between a collection plate and a spinning needle was 20 cm, and a rotation speed of a collection drum was 2000 rpm.
(2) The fiber was placed in an air furnace for pre-oxidation followed by heat treatment under a nitrogen atmosphere to obtain one-dimensional ion-conducting fiber. For the pre-oxidation, temperature T₁ = 230°C, time ti = 1 h, heating velocity S₁ = 1 °C/min. For the heat treatment, temperature T₂ = 800°C, time t₂ = 4 h, and heating velocity S₂ = 2 °C/min.

### <Preparation of positive electrode plate>

A positive electrode active material lithium iron phosphate (LFP), a conductive agent Super P, a binder polyvinylidene fluoride (PVDF), and the prepared one-dimensional ion-conducting fiber were mixed at a mass ratio of A, A = 96.5:1.0:1.5:1.0, with N-methylpyrrolidone (NMP) added, so as to prepare a slurry with a solid content of 75wt%, and the resulting slurry was then vacuum stirred to uniformity to obtain a positive electrode slurry. The positive electrode slurry was evenly applied onto a surface of a positive electrode current collector aluminum foil with a thickness of 12 µm and dried at 90°C to obtain a positive electrode plate having a positive electrode material layer coated on one surface and a loading amount of 3mAh/cm². Thickness Hi of the positive electrode material layer coated on one surface was 48 µm, and thickness H₂ of the positive electrode plate was 60 µm. The positive electrode plate was dried at 90°C followed by cold pressing, and then cut into a circular positive electrode plate with a diameter of 14 mm for later use.

### <Negative electrode plate>

A lithium-copper composite tape (manufacturer: China Energy Lithium Co., Ltd.) was used as a negative electrode plate, with a thickness of 50 µm, and cut into a circular negative electrode plate with a diameter of 18 mm for later use.

### <Separator>

A polyethylene film (provided by Celgard) with a thickness of 15 µm was used.

### <Preparation of electrolyte>

In a dry argon atmosphere, dioxolane (DOL) and dimethoxyethane (DME) were first mixed at a volume ratio of 1:1 to obtain an organic solvent, and then a lithium salt lithium bis-trifluoromethanesulfonimide (LiTFSI) was added into the organic solvent and dissolved and mixed to uniformity to obtain an electrolyte with a lithium salt concentration of 1 mol/L.

### <Preparation of lithium-ion battery>

In a dry argon atmosphere glove box, a negative electrode housing, the negative electrode plate, the separator, the positive electrode plate, and a positive electrode housing were arranged from bottom to top in sequence, the electrolyte was added, and resulting product was packaged using a packaging machine to obtain a button battery, that was, a lithium-ion battery. The negative electrode housing and the positive electrode housing were made of steel and had circular cavities. Based on mass of the lithium-ion battery, an adding percentage of the electrolyte was 10%.

### Examples 2 to 23

These examples were the same as Example 1 except that related preparation parameters were adjusted according to Table 1. In Example 21, the prepared one-dimensional ion-conducting fiber was ground for 1 h using a grinder (manufacturer: Hefei Kejing Material Technology Co., Ltd., model: MSK-SFM-15), then used for <Preparation of positive electrode plate>.

### Comparative example 1

This example was the same as Example 1 except that the one-dimensional ion-conducting fiber was not added during <Preparation of positive electrode plate> and that A = 97.5:1.0:1.5.

### Comparative example 2

This example was the same as Example 5 except that the one-dimensional ion-conducting fiber was not added during <Preparation of positive electrode plate> and that the mass ratio A of LFP, the conductive agent, and the binder was equal to 97.5:1.0:1.5.

### Comparative example 3

This example was the same as Example 7 except that the one-dimensional ion-conducting fiber was not added during <Preparation of positive electrode plate> and that the mass ratio A of LFP, the conductive agent, and the binder was equal to 97.5:1.0:1.5.

### Comparative examples 4 to 6

These examples were the same as Example 1 except that the one-dimensional ion-conducting fiber in Example 1 was replaced by LATP, LLTO, and LLZTO in sequence during <Preparation of positive electrode plate>.

### Comparative examples 7 to 9

These examples were the same as Example 1 except that related preparation parameters were adjusted according to Table 1.

The preparation parameters and performance tests of the examples and comparative examples are shown in Table 1.

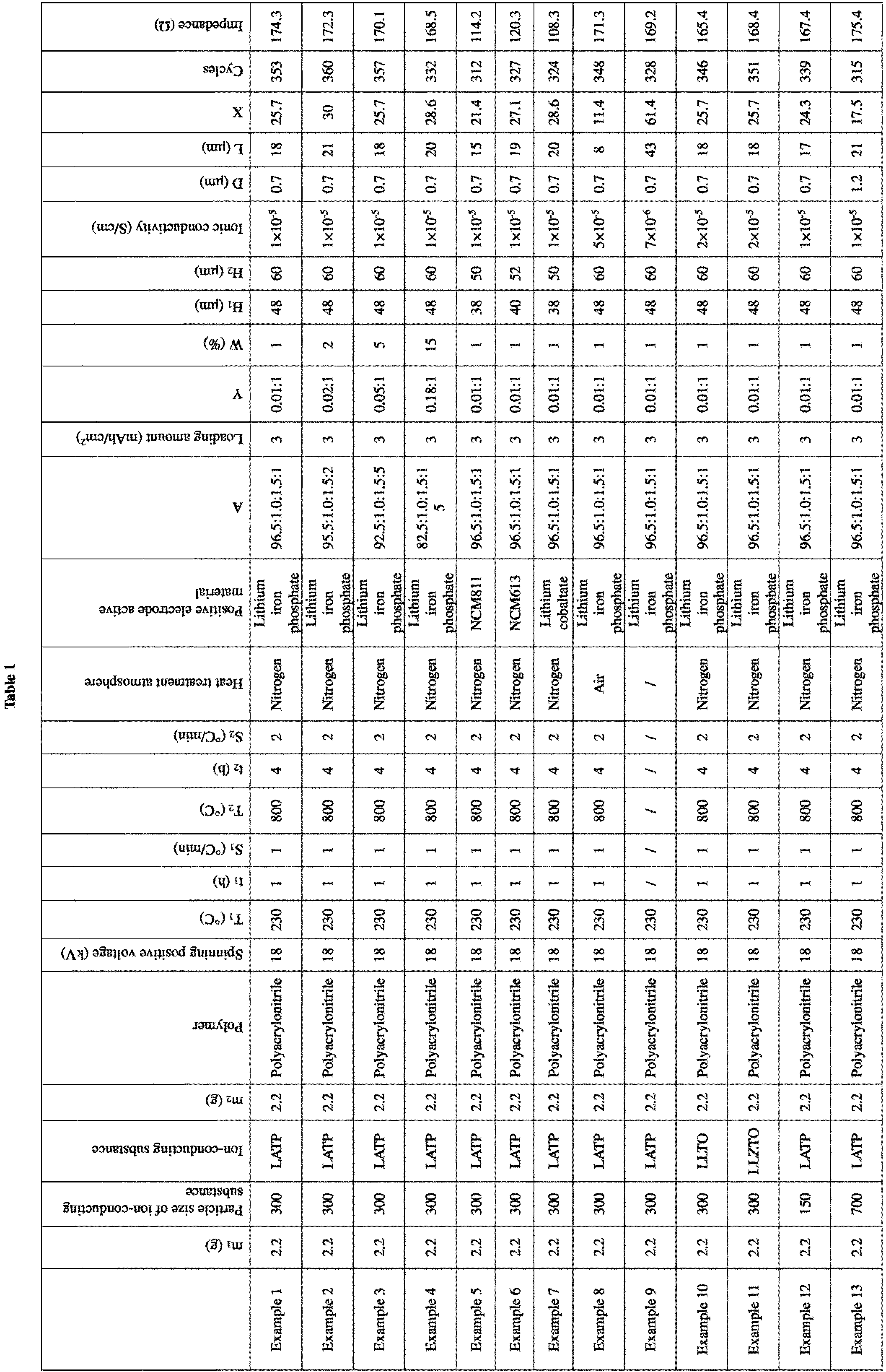

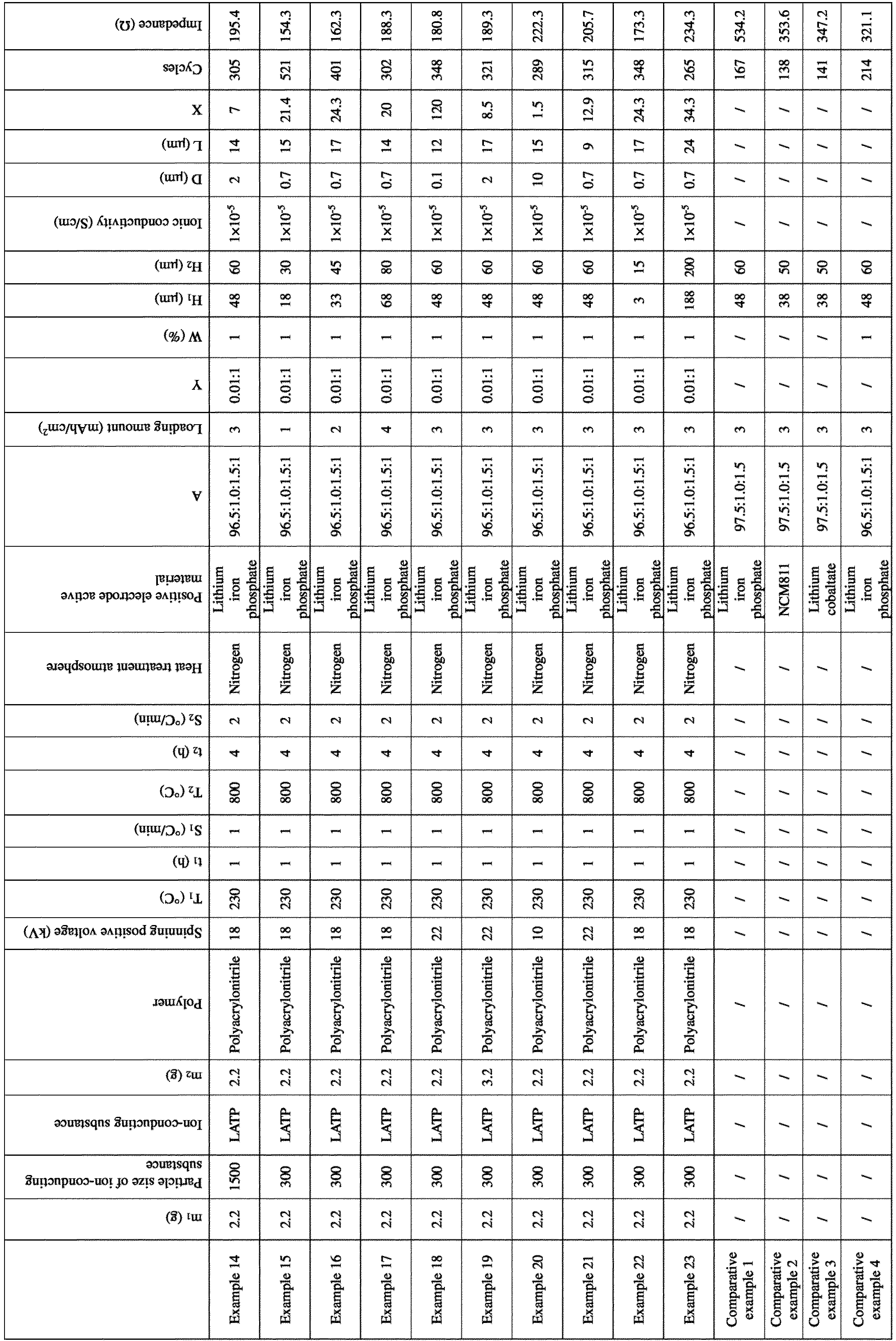

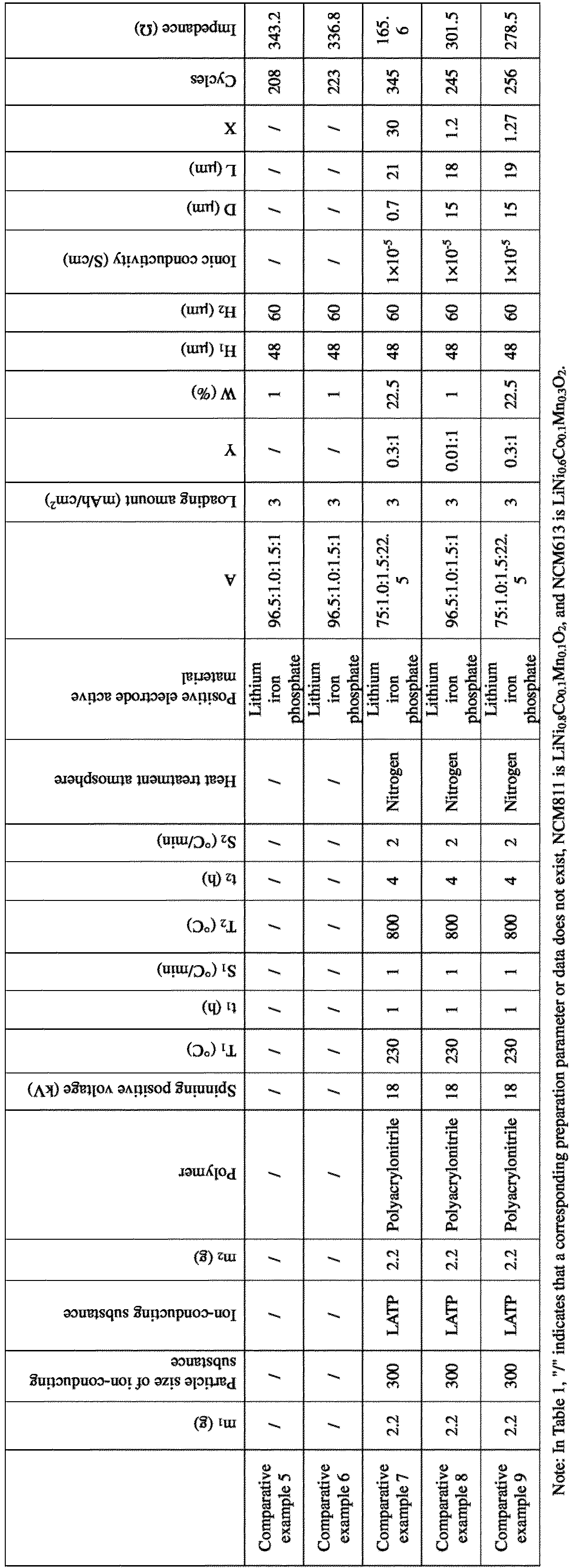

It can be seen from examples 1 to 23 and comparative examples 1 to 6 that the addition of the one-dimensional ion-conducting fiber to the positive electrode plate increases the number of cycles of the lithium-ion battery and reduces the impedance of the lithium-ion battery. This indicates that the positive electrode plate provided in this application can improve the cycling performance of the lithium-ion battery and reduce the impedance of the lithium-ion battery, indicating that reduced interfacial impedance leads to improved electrochemical performance of the lithium-ion battery.

It can be seen from examples 1 to 4 and comparative example 7 that although continuously increasing the mass ratio Y of the one-dimensional ion-conducting fiber to the positive electrode active material can further increase the number of cycles of the lithium-ion battery and reduce the impedance of the lithium-ion battery, it can be understood that as the mass ratio Y of the one-dimensional ion-conducting fiber to the positive electrode active material increases, the amount of the positive electrode active material decreases, leading to reduced energy density of the lithium-ion battery. This indicates that the mass ratio Y of the one-dimensional ion-conducting fiber to the positive electrode active material being controlled within the range given in this application has little effect on the energy density of the lithium-ion battery while improving the cycling performance of the lithium-ion battery and reducing the impedance of the lithium-ion battery. It can be seen from example 1, examples 18 to 20, and comparative example 8 that when the diameter D of the one-dimensional ion-conducting fiber is not within the range given in this application in comparative example 8, the lithium-ion battery has smaller number of cycles and higher impedance. This indicates that the diameter D of the one-dimensional ion-conducting fiber being controlled within the range given in this application can improve the cycling performance of the lithium-ion battery and reduce the impedance of the lithium-ion battery. It can be seen from examples 1 to 4, examples 18 to 20, and comparative example 9 that when both the mass ratio Y of the one-dimensional ion-conducting fiber to the positive electrode active material and the diameter D of the one-dimensional ion-conducting fiber are not within the ranges given in this application in comparative example 9, the low amount of the positive electrode active material results in reduced energy density of the lithium-ion battery, as well as smaller number of cycles and higher impedance, indicating that it is not possible to take into account the cycling performance, impedance, and energy density of the lithium-ion battery at the same time. This indicates that with addition of the one-dimensional ion-conducting fiber to the positive electrode plate, and the diameter D and length-diameter ratio X of the one-dimensional ion-conducting fiber and the mass ratio Y of the one-dimensional ion-conducting fiber to the positive electrode active material falling within the ranges given in this application, the number of cycles of the lithium-ion battery can be increased and the impedance of the lithium-ion battery can be reduced, while also considering the energy density of the lithium-ion battery, meaning that the electrochemical performance of the lithium-ion battery is improved.

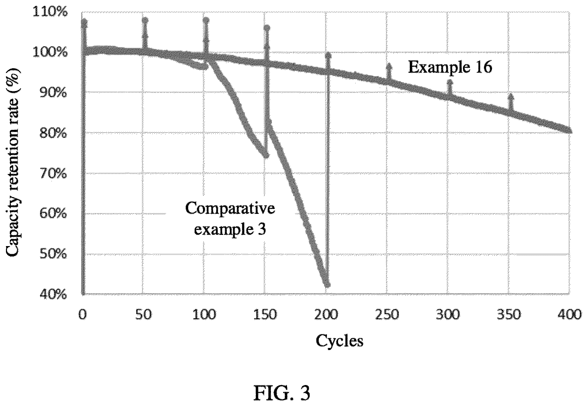

Specifically, as shown in FIG. 3, the lithium-ion battery in example 16 has a capacity retention rate of less than 80% after 401 cycles; whereas the lithium-ion battery in comparative example 3 has a capacity retention rate of less than 80% after only 141 cycles. This indicates that the lithium-ion batteries in the examples of this application have better cycling performance.

The length L of the one-dimensional ion-conducting fiber typically affects the electrochemical performance of the lithium-ion battery. It can be seen from examples 1 to 23 that when the length L of the one-dimensional ion-conducting fiber falls within the range given in this application, the obtained lithium-ion battery has a larger number of cycles and lower impedance, indicating that the lithium-ion battery obtained using the positive electrode plate provided in this application has good cycling performance and low impedance, that is, has good electrochemical performance.

The mass percentage W of the one-dimensional ion-conducting fiber typically affects the electrochemical performance of the lithium-ion battery. It can be seen from examples 1 to 4 that when the mass percentage W of the one-dimensional ion-conducting fiber falls within the range given in this application, the obtained lithium-ion battery has a larger number of cycles and lower impedance, indicating that the lithium-ion battery obtained using the positive electrode plate provided in this application has good cycling performance and low impedance, that is, has good electrochemical performance.

The substance contained in the one-dimensional ion-conducting fiber typically affects the electrochemical performance of the lithium-ion battery. It can be seen from examples 1, 10, and 11 that when the substance contained in the one-dimensional ion-conducting fiber is within the range given in this application, the one-dimensional ion-conducting fiber has a higher ionic conductivity, and the obtained lithium-ion battery has a larger number of cycles and lower impedance, indicating that the lithium-ion battery obtained using the positive electrode plate provided in this application has good cycling performance and low impedance, that is, has good electrochemical performance. The thickness Hi of the positive electrode material layer and the thickness H₂ of the positive electrode plate typically affect the electrochemical performance of the lithium-ion battery. It can be seen from example 1, examples 15 to 17, example 22, and example 23 that when the thickness Hi of the positive electrode material layer and the thickness H₂ of the positive electrode plate fall within the ranges given in this application, the one-dimensional ion-conducting fiber has a higher ionic conductivity, and the obtained lithium-ion battery has a larger number of cycles and lower impedance, indicating that the lithium-ion battery obtained using the positive electrode plate provided in this application has good cycling performance and low impedance, that is, has good electrochemical performance.

It should be noted that the terms "include", "comprise", or any of their variants are intended to cover a non-exclusive inclusion, such that a process, method, article, or device that includes a series of elements includes not only those elements but also other elements that are not expressly listed, or further includes elements inherent to such process, method, article, or device.

The embodiments in this specification are described in a related manner. For a part that is the same or similar between the embodiments, reference may be made between the embodiments. Each embodiment focuses on differences from other embodiments.

The foregoing descriptions are merely preferred examples of this application, and are not intended to limit the protection scope of this application. Any modifications, equivalent replacements, and improvements made without departing from the spirit and principle of this application shall fall within the protection scope of this application.

## Claims

1. A positive electrode plate, comprising: a positive electrode current collector and a positive electrode material layer provided on at least one surface of the positive electrode current collector; **characterized in that**, the positive electrode material layer comprises a one-dimensional ion-conducting fiber and a positive electrode active material; the one-dimensional ion-conducting fiber has a diameter of 0.1 µm to 10 µm and a length-diameter ratio of greater than or equal to 1.5; and a mass ratio of the one-dimensional ion-conducting fiber to the positive electrode active material is 0.01:1 to 0.2:1.

2. The positive electrode plate according to claim 1, **characterized in that**, the one-dimensional ion-conducting fiber has a diameter of 0.1 µm to 2 µm and a length-diameter ratio of 1.5 to 20000.

3. The positive electrode plate according to claim 1 or 2, **characterized in that**, the mass ratio of the one-dimensional ion-conducting fiber to the positive electrode active material is 0.01:1 to 0.05:1.

4. The positive electrode plate according to any one of claims 1 to 3, **characterized in that**, a length of the one-dimensional ion-conducting fiber is greater than or equal to 1 µm.

5. The positive electrode plate according to any one of claims 1 to 4, **characterized in that**, based on a mass of the positive electrode material layer, a mass percentage of the one-dimensional ion-conducting fiber is 1% to 15%.

6. The positive electrode plate according to any one of claims 1 to 5, **characterized in that**, an ionic conductivity of the one-dimensional ion-conducting fiber is greater than or equal to 1×10⁻⁶ S/cm.

7. The positive electrode plate according to any one of claims 1 to 6, **characterized in that**, the one-dimensional ion-conducting fiber comprises copper-ion-modified cellulose.

8. The positive electrode plate according to any one of claims 1 to 7, **characterized in that**, the one-dimensional ion-conducting fiber comprises a polymer fiber containing an ion-conducting substance and a polymer; wherein the ion-conducting substance comprises at least one of the following compounds or doped compounds thereof: LATP, LLZO, LLTO, LLZTO, or LAGP, and a doping element in the doped compound comprises at least one of Al, Ge, or Si; the polymer comprises at least one of polyacrylonitrile, polyaniline, polyvinyl fluoride, polymethyl methacrylate, or polyacrylic acid; and a mass ratio of the ion-conducting substance to the polymer is 1:2 to 1:1.

9. The positive electrode plate according to any one of claims 1 to 8, **characterized in that**, the positive electrode active material comprises at least one of lithium cobaltate, lithium manganate, lithium iron phosphate, lithium nickel cobalt manganese oxide, or a material rich in lithium or manganese.

10. The positive electrode plate according to any one of claims 1 to 9, **characterized in that**, a thickness of the positive electrode material layer is 3 µm to 195 µm, and a thickness of the positive electrode plate is 15 µm to 200 µm.

11. The positive electrode plate according to any one of claims 1 to 10, **characterized in that**, the one-dimensional ion-conducting fiber has a diameter of 0.1 µm to 2 µm and a length-diameter ratio of 5 to 200.

12. The positive electrode plate according to any one of claims 1 to 11, **characterized in that**, a length of the one-dimensional ion-conducting fiber is 1 µm to 1000 µm.

13. The positive electrode plate according to any one of claims 1 to 12, **characterized in that**, a length of the one-dimensional ion-conducting fiber is 1 µm to 100 µm.

14. An electrochemical apparatus, wherein the electrochemical apparatus comprises a solid electrolyte and the positive electrode plate according to any one of claims 1 to 13.

15. An electronic apparatus, wherein the electronic apparatus comprises the electrochemical apparatus according to claim 14.
